# EUROPEAN PATENT SPECIFICATION

(11) **EP 3 429 822 B1**
(45) Date of publication and mention of the grant of the patent: **30.03.2022**
(21) Application number: 16722207.4
(22) Date of filing: 12.05.2016
(51) Int. Cl.: B29C 64/165, B29C 64/20

(54) **3-DIMENSIONAL PRINTER**
3-DIMENSIONALER DRUCKER
IMPRIMANTE TRIDIMENSIONNELLE

(43) Date of publication of application: 23.01.2019
(73) Proprietor: Hewlett-Packard Development Company, L.P., Spring TX 77389 (US)
(72) Inventor: VILAJOSANA, Xavier, 08174 Sant Cugat del Valles (Barcelona) (ES); FERRAN FARRAS, Marina, 08174 Sant Cugat del Valles (Barcelona) (ES); COMAS, Esteve, 08174 Sant Cugat del Valles (Barcelona) (ES)
(74) Representative: Haseltine Lake Kempner LLP
(86) International application number: PCT/EP2016/060628
(87) International publication number: WO 2017/194105

(56) References cited:
- GB-A- 2 493 398
- US-A1- 2005 023 719

## Description

### BACKGROUND

3-dimensional (3D) printers, also referred to as additive manufacturing systems, are used to generate 3D objects. A 3D printer may generate a 3D object by a layer-by-layer-process which constitutes multiple processing cycles. In each processing cycle, one layer of the 3D object may be generated.

GB 2493398 A corresponding to the preambles of the independent claims, describes methods and apparatus for selectively combining particulate material.

### SUMMARY

The scope of the invention is defined by the appended claims.

### BRIEF DESCRIPTION OF DRAWINGS

The following detailed description references the drawings, wherein:
Fig. 1 illustrates a block diagram of a 3-dimensional (3D) printer, according to an example of the present subject matter;
Figs. 2(a)-2(b) illustrate operation of fusing lamps in a 3D printer, according to an example of the present subject matter;
Fig. 3 illustrates a method of operating fusing lamps of a fusion assembly in a 3D printer, according to an example of the present subject matter; and
Fig. 4 illustrates a system environment implementing a non-transitory computer-readable medium for operating fusing lamps of a fusion assembly in a 3D printer, according to an example of the present subject matter.

### DETAILED DESCRIPTION

3-dimensional (3D) objects can be generated using a variety of 3D printers or additive manufacturing systems. One such example 3D printer is a dual carriage system including a carriage that provides a build material, and a carriage that provides chemical agents, for example fusing agent and detailing agent, for generating a 3D object. The carriage that provides the build material includes a material coating unit for forming a layer of the build material. The carriage that provides chemical agents includes a print-head array to dispense the chemical agents in accordance with data based on a 3D object model. The 3D printer also has fusion assemblies, each having a fusing lamp that provides fusing energy. The fusing energy from the fusing lamp is applied to the layer of build material. The portions of build material that has the fusing agent absorbs more energy, from the fusing lamp, than other portions of the build material. Thus, the build material at the portions having the fusing agent melts and fuses. For generating the 3D object, the two carriages may move alternately in the same plane and in directions perpendicular to each other, over a print area, and generate the 3D object in a layer-by-layer manner. In one example, one layer of the 3D object may be formed, or printed, in one processing cycle.

In a processing cycle, the carriage having the material coating unit may move in a specific direction over the print area to coat a layer of build material, and the carriage having the print-head array may move in a perpendicular direction to apply the chemical agents. The chemical agents may be coated in a pattern corresponding to a cross-section of a slice of the 3D object. The fusion assemblies may apply the fusing energy, and the portion of build material having the fusing agent may melt and fuse to form a layer of the 3D object. It may be noted that, in the next processing cycle, the carriages may move in directions opposite to their respective previous directions of movement, for forming another layer of the 3D object. In this example, the 3D printer may generate layers of a 3D object whilst the carriages moved in a bi-directional manner. Fusion assemblies in a 3D printer are generally replaced or serviced frequently.

The present subject matter describes approaches for operating fusing lamps of fusion assemblies in a 3D printer. The approaches of the present subject matter facilitate increasing the lifespan of a fusion assembly in a 3D printer and reducing the frequency of servicing and replacement of the fusion assembly.

In accordance with an example implementation of the present invention, as set out in the independent claims, a first fusing lamp of a fusion assembly comprising at least two fusing lamps is illuminated for a number of processing cycles and a second fusing lamp of the fusion assembly is illuminated for a subsequently number of processing cycles. The fusion assembly may be coupled to a carriage of the 3D printer. The carriage may be the one including a print-head array or a material coating unit. It may be noted that after the subsequent number of processing cycles, the first fusing lamp may again be illuminated for a further number of processing cycles. Thus, different fusing lamps of a fusion assembly are alternately used for respective number of processing cycles for generating a 3D object.

In an example implementation, the first fusing lamp and the second fusing lamp of the fusion assembly may be illuminated, in a round-robin manner, for a respective processing cycle. In an arrangement where the carriage changes directions after each processing cycle, the first fusing lamp of the fusion assembly may be illuminated when the carriage is moved in a first direction, and the second fusing lamp of the fusion assembly may be illuminated when the carriage is moved in a second direction, the second direction being opposite to the first direction.

The approaches of the present subject matter, as described above, may be extended to each fusion assembly of the 3D printer. By using different fusing lamps of a fusion assembly alternately for respective number of processing cycles, the fusion workload is balanced across the fusing lamps of the fusion assembly. As a result, the fusing lamps may age substantially uniformly, which may increase the lifespan of the fusing assembly and reduce the frequency of servicing and replacement of the fusing assembly.

The present subject matter is further described with reference to the accompanying figures. Wherever possible, the same reference numerals are used in the figures and the following description to refer to the same or similar parts. It should be noted that the description and figures merely illustrate principles of the present subject matter.

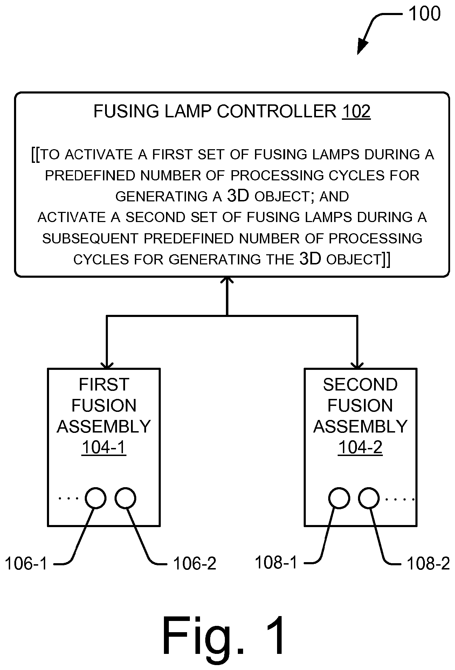

Fig. 1 illustrates a block diagram of a 3D printer 100, according to an example of the present subject matter. The 3D printer 100 may be a dual carriage system in which fusing lamps are operated in accordance with the present subject matter for generation of 3D objects in a layer-by-layer manner.

The 3D printer 100, as shown, includes two fusion assemblies, namely a first fusion assembly 104-1 and a second fusion assembly 104-2. In an example implementation, the first fusion assembly 104-1 and the second fusion assembly 104-2 may be coupled on two opposite sides of a carriage (not shown) of the 3D printer, such that the fusion assemblies 104-1 and 104-2 move together with the carriage. The carriage may include a print-head array, also referred to as print-heads, which dispenses chemical agents, such as fusing agent and detailing agent, for generating a 3D object. The carriage may include a material coating unit which coats a build material from which the 3D object is to be generated. The build material may be in the form of a powder. In an example implementation, the first fusion assembly 104-1 and the second fusion assembly 104-2 may be coupled to different carriages in the 3D printer.

Each of the fusion assemblies 104-1 and 104-2 includes at least two fusing lamps 106-1, 106-2 and 108-1, 108-2, respectively, along with other components, such as reflectors, sensors, planar glasses, wiring, cooling arrangement, etc. (not shown). The fusing lamps in each of the fusion assemblies are placed laterally in the same plane. In one example, the fusing lamps when illuminated emit light of wavelengths in near-infrared range to provide energy to melt and fuse portions of build material having the fusing agent on a print area (not shown in Fig. 1). In an example, the fusing lamps 106-1, 106-2, 108-1, and 108-2 may be tungsten halogen lamps.

Further, as shown in Fig. 1, the 3D printer 100 includes a fusing lamp controller 102 coupled to the first fusion assembly 104-1 and to the second fusion assembly 104-2. The fusing lamp controller 102 may be implemented through a combination of any suitable hardware and computer-readable instructions. The fusing lamp controller 102 may be implemented in a number of different ways to perform various functions for the purposes of operating the fusing lamps of the fusion assemblies in the 3D printer 100. For example, the computer-readable instructions for the fusing lamp controller 102 may be processor-executable instructions stored in a non-transitory computer-readable storage medium, and the hardware for the fusing lamp controller 102 may include a processing resource (e.g., processor(s)), to execute such instructions. In the present examples, the non-transitory computer-readable storage medium stores instructions that, when executed by the processing resource, implements the fusing lamp controller 102. The 3D printer 100 may include the non-transitory computer-readable storage medium storing the instructions and the processing resource (not shown) to execute the instructions. In an example, the non-transitory computer-readable storage medium storing the instructions may reside outside the 3D printer 100, but accessible to the 3D printer 100 and the processing resource of the 3D printer 100. In another example, the fusing lamp controller 102 may be implemented by electronic circuitry.

The processing resource of the 3D printer 100 may be implemented as microprocessors, microcomputers, microcontrollers, digital signal processors, central processing units, state machines, logic circuitries, and/or any devices that manipulate signals based on operational instructions. Among other capabilities, the processing resource may fetch and execute computer-readable instructions stored in a non-transitory computer-readable storage medium coupled to the processing resource of the 3D printer 100. The non-transitory computer-readable storage medium may include, for example, volatile memory (e.g., RAM), and/or non-volatile memory (e.g., EPROM, flash memory, NVRAM, memristor, etc.).

A procedure for operating fusing lamps of fusion assemblies in a 3D printer, in accordance with an example implementation, is now described. Example implementations of the present subject matter are described with reference to the 3D printer 100 having the first fusion assembly 104-1 and the second fusion assembly 104-2, as shown, with each fusion assembly having two fusing lamps 106-1, 106-2, and 108-1, 108-2, respectively. The procedure can be implemented in a similar manner for a 3D printer having more than two fusion assemblies, and any of the fusion assemblies having more than two fusing lamps.

In an example implementation, during generation of a 3D object, the fusing lamp controller 102 activates a first set of fusing lamps of the 3D printer 100 for a number of processing cycles, where the first set of fusing lamps includes a first fusing lamp 106-1 of the first fusion assembly 104-1 and a first fusing lamp 108-1 of the second fusion assembly 104-2. Further, the fusing lamp controller 102 activates a second set of fusing lamps of the 3D printer 100 for a subsequent number of processing cycles, where the second set of fusing lamps includes a second fusing lamp 106-2 of the first fusion assembly 104-1 and a second fusing lamp 108-2 of the second fusion assembly 104-2. For activation of a fusing lamp, the fusing lamp controller 102 may function to switch-ON the fusing lamp, such that the fusing lamp illuminates to emit light. After the subsequent processing cycles, the fusing lamp controller 102 may again activate the first set of fusing lamps followed by activation of the second set of fusing lamps, such that the first set and the second set of fusing lamps are illuminated in a round-robin manner during the generation of the 3D object.

The number of processing cycles for which the first set of fusing lamps is activated may be one or more than one. Similarly, the subsequent number of processing cycles for which the second set of fusing lamps is activated may be one or more than one. In an example implementation, the number of processing cycles and the subsequent number of processing cycles may be equal. For example, the fusing lamp controller 102 may activate the first set of fusing lamps for two processing cycles, then activate the second of fusing lamps for the next two processing cycles, then activate the first set of fusing lamps for the next two processing cycles, and so on. Further, the number of processing cycles for which the first set of fusing lamps is activated and the subsequent number of processing cycles for which the second set of fusing lamps is activated may be pre-configured or modified by a user over the life of the fusing lamps.

In an example implementation, the fusing lamp controller 102 may be coupled to a counter (not shown) which is operated based on processing cycle numbering. The fusing lamp controller 102 communicates with the counter to determine the set of fusing lamps to be activated. For example, at the beginning, the counter may be set equal to the number of processing cycles for which the first set of fusing lamp is to be activated. Accordingly, the first set of fusing lamps is activated by the fusing lamp controller 102 for the number of processing cycles. At the end of each processing cycle, the counter may be decremented by 1. The counter may be decremented until it reaches 0. Upon reaching 0, before starting the next processing cycle, the counter may be set equal to the subsequent number of processing cycles for which the second set of fusing lamps in to be activated, and accordingly the second set of fusing lamps is activated by the fusing lamp controller 102 for the subsequent number of processing cycles. The fusing lamp controller 102 may switch between activation of the first set and the second set when the counter transitions from 0 to a non-zero number. The counter may be operated by the fusing lamp controller 102 or by a separate processing resource of the 3D printer 100.

Further, in an example implementation, when the first set of fusing lamps is active or ON during a processing cycle, the fusing lamp controller 102 may determine whether the second set of fusing lamps is operable, and can be activated, for a subsequent processing cycle. This determination may be performed by the fusing lamp controller 102 during the processing cycle for which the counter is 1. When the fusing lamp controller 102 determines that a fusing lamp from the second set, belonging to either the first fusion assembly 104-1 or the second fusion assembly 104-2 is inoperable, the fusing lamp controller 102 may activate a corresponding fusing lamp from the first set that is operable, belonging to the same fusion assembly, so that the fusion process and generation of the 3D object are not affected.

In an example implementation, in a similar manner as described above, when the second set of fusing lamps is active or ON during a processing cycle, the fusing lamp controller 102 may determine whether the first set of fusing lamps is operable, and can be activated, for a subsequent processing cycle. When the fusing lamp controller 102 determines that a fusing lamp from the first set, belonging to either the first fusion assembly 104-1 or the second fusion assembly 104-2 is inoperable, the fusing lamp controller 102 may activate a corresponding fusing lamp from the second set that is operable, belonging to the same fusion assembly.

In an example implementation, each of the fusion assemblies 104-1 and 104-2 may have a current sensor coupled to each fusing lamp. The fusing lamp controller 102 may probe the current sensor coupled to a fusing lamp to determine whether the fusing lamp is operable or not.

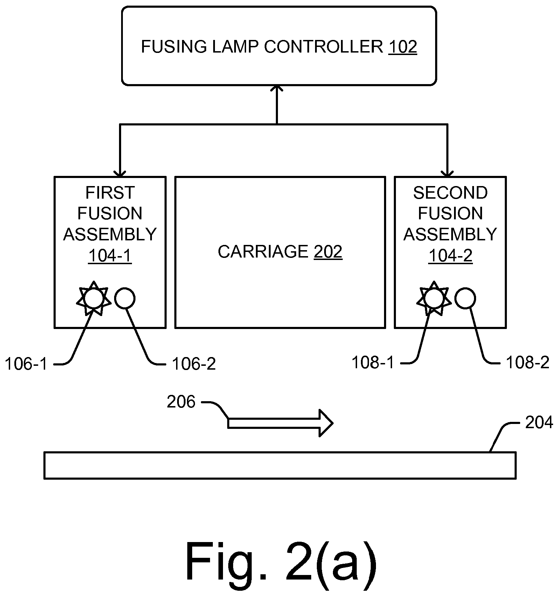

Figs. 2(a)-2(b) illustrate operation of fusing lamps in a 3D printer 200, according to an example of the present subject matter. Figs. 2(a)-2(b) illustrate the operation of fusing lamps in which the first set of fusing lamps and the second set of fusing lamps are alternately activated after every one processing cycle. The 3D printer 200, as shown, includes a carriage 202. The carriage may include a print-head array or a material coating unit. The first fusion assembly 104-1 is coupled on one side of the carriage 202, and the second fusion assembly 104-2 is coupled on another side of the carriage 202, the other side being opposite to the side on which the first fusion assembly 104-1 is coupled. The fusion assemblies 104-1 and 104-2 are coupled to the carriage 202 such that the fusion assemblies 104-1 and 104-2 may move together with the carriage 202. Since the carriage 202 and the fusion assemblies 104-1 and 104-2 may move in an opposite direction after each processing cycle, the first set of fusing lamps may be activated in one direction of movement, and the second set of fusing lamps may be activated in the other direction of movement.

As shown in Fig. 2(a), when the carriage 202 is moving on a print area 204 and in a direction indicated by arrow 206, the fusing lamp controller 102 may activate, or switch-ON, the first fusing lamp 106-1 of the first fusion assembly 104-1 and the first fusing lamp 108-1 of the second fusion assembly 104-2. As shown, the first fusing lamp 106-1 of the first fusion assembly 104-1 is farther from the carriage 202, and the first fusing lamp 108-1 of the second fusion assembly 104-2 is nearer to the carriage 202.

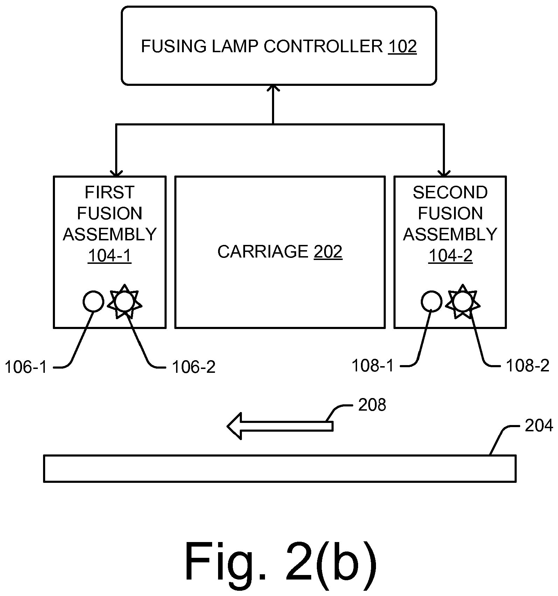

As shown in Fig. 2(b), when the carriage 202 is moving on the print area 204 and in a direction indicated by arrow 208, the fusing lamp controller 102 may activate, or switch-ON, the second fusing lamp 106-2 of the first fusion assembly 104-1 and the second fusing lamp 108-2 of the second fusion assembly 104-2. As shown, the second fusing lamp 106-2 of the first fusion assembly 104-1 is nearer to the carriage 202, and the second fusing lamp 108-2 of the second fusion assembly 104-2 is farther from the carriage 202.

Further, the fusing lamp controller 102 determines whether the second fusing lamp 106-2 of the first fusion assembly 104-1 and the second fusing lamp 108-2 of the second fusion assembly 104-2 are operable, while the carriage 202 is moving in the direction indicated by arrow 206. If the second fusing lamp 106-2 of the first fusion assembly 104-1 is determined to be inoperable, then the fusing lamp controller 102 activates the first fusing lamp 106-1 of the first fusion assembly 104-1 during the movement of the carriage 202 in the direction indicated by arrow 208. Similarly, if the second fusing lamp 108-2 of the second fusion assembly 104-2 is determined to be inoperable, then the fusing lamp controller 102 activates the first fusing lamp 108-1 of the second fusion assembly 104-2 during the movement of the carriage 202 in the direction indicated by arrow 208.

Further, the fusing lamp controller 102 determines whether the first fusing lamp 106-1 of the first fusion assembly 104-1 and the first fusing lamp 108-1 of the second fusion assembly 104-2 are operable, while the carriage 202 is moving in the direction indicated by arrow 208. If the first fusing lamp 106-1 of the first fusion assembly 104-1 is determined to be inoperable, then the fusing lamp controller 102 activates the second fusing lamp 106-1 of the first fusion assembly 104-1 during the movement of the carriage 202 in the direction indicated by arrow 206. Similarly, if the first fusing lamp 108-1 of the second fusion assembly 104-2 is determined to be inoperable, then the fusing lamp controller 102 activates the second fusing lamp 108-2 of the second fusion assembly 104-2 during the movement of the carriage 202 in the direction indicated by arrow 206.

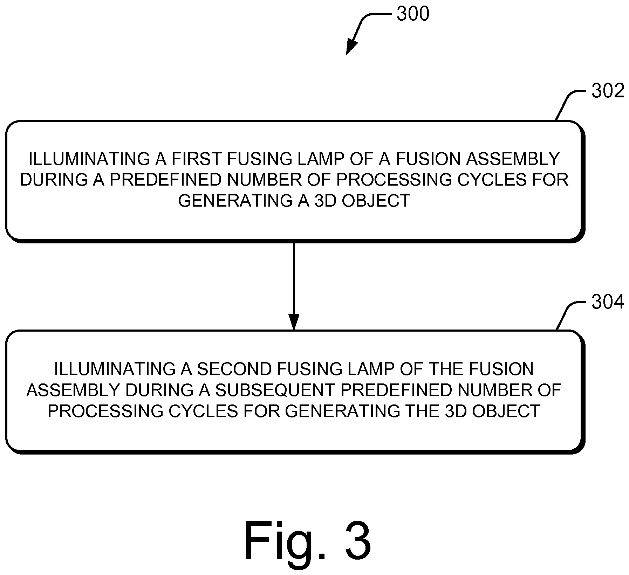

Fig. 3 illustrates a method 300 of operating fusing lamps of a fusion assembly in a 3D printer, according to an example of the present subject matter. The method 300 can be implemented by processor(s) or computing system(s) through any suitable hardware, a non-transitory machine readable medium, or a combination thereof. Further, although the method 300 is described in context of the aforementioned 3D printer 100, other suitable computing or printing systems may be used for execution of the method 300. It may be understood that processes involved in the method 300 can be executed based on instructions stored in a non-transitory computer-readable medium, as will be readily understood. The non-transitory computer-readable medium may include, for example, digital memories, magnetic storage media, such as a magnetic disks and magnetic tapes, hard drives, or optically readable digital data storage media.

Referring to Fig. 3, at block 302, a first fusing lamp of a fusion assembly of the 3D printer 100 is illuminated during a number of processing cycles for generating a 3D object. At block 304, a second fusing lamp of the fusion assembly of the 3D printer 100 is illuminated during a subsequent number of processing cycles for generating the 3D object. With this, the first and the second fusing lamps of the fusion assembly are illuminated alternately, in round-robin manner, for respective number of processing cycles. The first and the second fusing lamps of the fusion assembly may be alternately illuminated by the fusing lamp controller 102 of the 3D printer 100, based on a counter, in a manner as described earlier in the description. The operation of fusing lamps, as described above, may be applied for each of the fusion assemblies of the 3D printer 100.

Further, when the first fusing lamp of the fusion assembly is active or ON for a fusing cycle, it is determined whether the second fusing lamp of the fusion assembly is operable for a subsequent processing cycle. When the second fusing lamp of the fusion assembly is determined to be inoperable, the first fusing lamp of the fusion assembly is illuminated during the subsequent processing cycle, so that the generation of 3D object is not affected. Similarly, when the second fusing lamp of the fusion assembly is active or ON for a fusing cycle, it is determined whether the first fusing lamp of the fusion assembly is operable for a subsequent processing cycle. When the first fusing lamp of the fusion assembly is determined to be inoperable, the second fusing lamp of the fusion assembly is illuminated during the subsequent processing cycle.

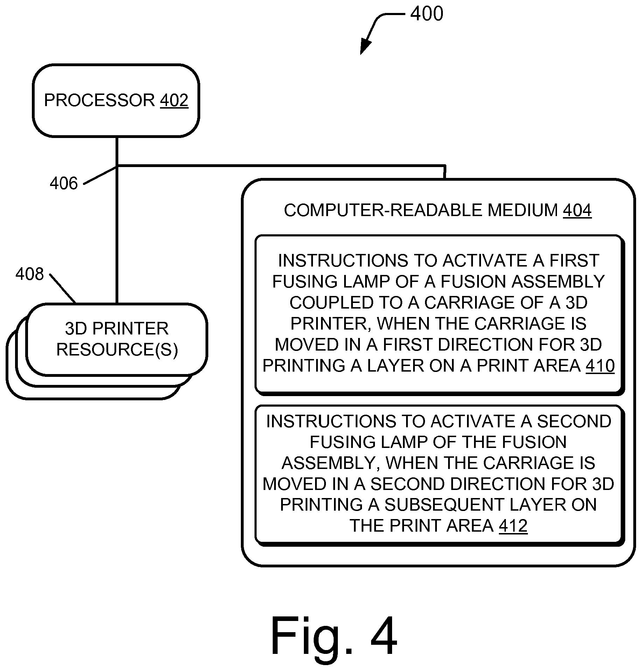

Fig. 4 illustrates a system environment 400 implementing a non-transitory computer-readable medium for operating fusing lamps of a fusion assembly in a 3D printer, according to an example of the present subject matter. In an example implementation, the system environment 400 may be a 3D printer, for example a dual carriage system. The system environment 400 includes a processor 402 communicatively coupled to the non-transitory computer-readable medium 404 through a communication link 406. In an example, the processor 402 may be a processing resource of the 3D printer that fetches and executes computer-readable instructions from the non-transitory computer-readable medium 404.

The non-transitory computer-readable medium 404 can be, for example, an internal memory device or an external memory device. In an example implementation, the communication link 406 may be a direct communication link, such as any memory read/write interface. In another example implementation, the communication link 406 may be an indirect communication link, such as a network interface. In such a case, the processor 402 can access the non-transitory computer-readable medium 404 through a network. The network may be a single network or a combination of multiple networks and may use a variety of different communication protocols.

The processor 402 and the non-transitory computer-readable medium 404 may also be communicatively coupled to 3D printer resource(s) 408. The 3D printer resource(s) 408 may include fusion assemblies of the 3D printer. In an example implementation, the non-transitory computer-readable medium 404 includes a set of computer-readable instructions for operation fusing lamps of the fusion assemblies of the 3D printer. The set of computer-readable instructions can be accessed by the computer 402 through the communication link 406 and subsequently executed to perform acts for operating the fusing lamps.

Referring to Fig. 4, in an example, the non-transitory computer-readable medium 404 includes instructions 410 to activate a first fusing lamp of a fusion assembly coupled to a carriage of the 3D printer, when the carriage is moved in a first direction for 3D printing a layer on a print area. The carriage may include a print-head array or a material coating unit. The non-transitory computer-readable medium 404 includes instructions 412 to activate a second fusing lamp of the fusion assembly, when the carriage is moved in a second direction for 3D printing a subsequent layer on the print area.

The non-transitory computer-readable medium 404 may include instructions to determine whether the second fusing lamp of the fusion assembly is operable, when the carriage is moved in the first direction. The non-transitory computer-readable medium 404 may further include instructions to activate the first fusing lamp of the fusion assembly during movement of the carriage in the second direction, when the second fusing lamp of the fusion assembly is determined to be inoperable.

The non-transitory computer-readable medium 404 may include instructions to determine whether the first fusing lamp of the fusion assembly is operable, when the carriage is moved in the second direction. The non-transitory computer-readable medium 404 may further include instructions to activate the second fusing lamp of the fusion assembly during the movement of the carriage in the second direction, when the first fusing lamp of the fusion assembly is determined to be inoperable.

Although examples for the present disclosure have been described in language specific to structural features and/or methods, it is to be understood that the appended claims are not limited to the specific features or methods described herein. Rather, the specific features and methods are disclosed and explained as examples of the present disclosure.

## Claims

1. A 3-dimensional (3D) printer (100, 200) comprising:
a first fusion assembly (104-1) having at least two fusing lamps;
a second fusion assembly (104-2) having at least two fusing lamps; and
**characterized in that** the 3D printer (100, 200) comprises a fusing lamp controller (102), coupled to the first fusion assembly (104-1) and the second fusion assembly (104-2), configured to:
activate a first set of fusing lamps during a number of processing cycles for generating a 3D object, the first set of fusing lamps comprising a first fusing lamp (106-1) of the first fusion assembly (104-1) and a first fusing lamp (108-1) of the second fusion assembly (104-2); and
activate a second set of fusing lamps during a subsequent number of processing cycles for generating the 3D object, the second set comprising a second fusing lamp (106-2) of the first fusion assembly (104-1) and a second fusing lamp (108-2) of the second fusion assembly (104-2);
wherein the first set of fusing lamps (106-1, 108-1) and second set of fusing lamps (106-2, 108-2) are activated alternately.

2. The 3D printer (100, 200) as claimed in claim 1, wherein, when the first set of fusing lamps is active, the fusing lamp controller (102) is configured to:
determine whether the second set of fusing lamps is operable for a subsequent processing cycle.

3. The 3D printer (100, 200) as claimed in claim 1, wherein, when the second set of fusing lamps is active, the fusing lamp controller (102) is configured to:
determine whether the first set of fusing lamps is operable for a subsequent processing cycle.

4. The 3D printer (100, 200) as claimed in claim 1, wherein the first fusion assembly (104-1) is on one side of a carriage (202) of the 3D printer (100, 200) and the second fusion assembly (104-2) on another side of the carriage (202), the carriage (202) including one of a print-head array and a material coating unit.

5. The 3D printer (100, 200) as claimed in claim 4, wherein
the first fusing lamp (106-1) of the first fusion assembly (104-1) is farther from the carriage (202),
the first fusing lamp (108-1) of the second fusion assembly (104-2) is nearer to the carriage (202),
the second fusing lamp (106-2) of the first fusion assembly (104-1) is nearer to the carriage (202), and
the second fusing lamp (108-2) of the second fusion assembly (104-2) is farther from the carriage (202).

6. A method of operating fusing lamps of fusion assemblies in a 3-dimensional (3D) printer (100, 200), the method comprising:
activating a first set of fusing lamps during a number of processing cycles for generating a 3D object,
**characterized in that** the first set of fusing lamps includes a first fusing lamp (106-1) of a first fusion assembly (104-1) and a first fusing lamp (108-1) of a second fusion assembly (104-2); and
the method further comprises:
activating a second set of fusing lamps during a subsequent number of processing cycles for generating the 3D object, where the second set of fusing lamps includes a second fusing lamp (106-2) of the first fusion assembly (104-1) and a second fusing lamp (108-2) of the second fusion assembly (104-2);
wherein the first set of fusing lamps (106-1, 108-1) and second set of fusing lamps (106-2, 108-2) are activated alternately.

7. The method as claimed in claim 6, comprising:
when the first set of fusing lamps of the fusion assemblies is active for a fusing cycle, determining whether the second set of fusing lamps of the fusion assemblies is operable for a subsequent processing cycle.

8. The method as claimed in claim 7, comprising:
when the second set of fusing lamps of the fusion assemblies is determined to be inoperable, illuminating the first set of fusing lamps of the fusion assemblies during the subsequent processing cycle.

9. The method as claimed in claim 6, comprising:
when the second set of fusing lamps of the fusion assemblies is active for a fusing cycle, determining whether the first set of fusing lamps of the fusion assemblies is operable for a subsequent processing cycle.

10. The method as claimed in claim 9, comprising:
when the first set of fusing lamps of the fusion assemblies is determined to be inoperable, illuminating the second set of fusing lamps of the fusion assemblies during the subsequent processing cycle.

11. A non-transitory computer-readable medium (404) comprising computer-readable instructions, which, when executed by a processor (402) of the 3-dimensional (3D) printer (100, 200) of claim 1, cause the processor (402) to:
activate the first set of fusing lamps including the first fusing lamp (106-1) of the first fusion assembly (104-1) and the first fusing lamp (108-1) of the second fusion assembly (104-2),
**characterized in that** the first fusion assembly (104-1) and the second fusion assembly (104-2) are coupled to opposite sides of a carriage (202) of the 3D printer (100, 200), when the carriage (202) is moved in a first direction for 3D printing a layer on a print area (204); and **in that**
the instructions further cause the processor (402) to:
activate the second set of fusing lamps including the second fusing lamp (106-2) of the first fusion assembly (104-1) and the second fusing lamp (108-2) of the second fusion assembly (104-2), when the carriage (202) is moved in a second direction for 3D printing a subsequent layer on the print area (204);
wherein the first set of fusing lamps (106-1, 108-1) and second set of fusing lamps (106-2, 108-2) are activated alternately.

12. The non-transitory computer-readable medium (404) as claimed in claim 11, wherein the instructions, when executed by the processor (402), cause the processor (402) to:
determine whether the second set of fusing lamps of the fusion assembly is operable, when the carriage (202) is moved in the first direction.

13. The non-transitory computer-readable medium (404) as claimed in claim 12, wherein the instructions, when executed by the processor (402), cause the processor (402) to:
when the second set of fusing lamps of the fusion assembly is determined to be inoperable, activate the first set of fusing lamps of the fusion assembly during movement of the carriage (202) in the second direction.

14. The non-transitory computer-readable medium (404) as claimed in claim 11, wherein the instructions, when executed by the processor (402), cause the processor (402) to:
determine whether the first set of fusing lamps of the fusion assembly is operable, when the carriage (202) is moved in the second direction.

15. The non-transitory computer-readable medium (404) as claimed in claim 14, wherein the instructions, when executed by the processor (402), cause the processor (402) to:
when the first set of fusing lamps of the fusion assembly is determined to be inoperable, activate the second set of fusing lamps of the fusion assembly during movement of the carriage (202) in the first direction.

## Patentansprüche

1. 3-dimensionaler (3D) Drucker (100, 200), der Folgendes umfasst:
eine erste Schmelzanordnung (104-1), die wenigstens zwei Schmelzlampen aufweist;
eine zweite Schmelzanordnung (104-2). die wenigstens zwei Schmelzlampen aufweist; und
**dadurch gekennzeichnet, dass** der 3D-Drucker (100, 200) eine Schmelzlampensteuerung (102) umfasst, die mit der ersten Schmelzanordnung (104-1) und der zweiten Schmelzanordnung (104-2) gekoppelt ist, die zu Folgendem konfiguriert ist:
Aktivieren eines ersten Satzes von Schmelzlampen während einer Anzahl von Verarbeitungszyklen zum Erzeugen eines 3D-Objekts, wobei der erste Satz von Schmelzlampen eine erste Schmelzlampe (106-1) der ersten Schmelzanordnung (104-1) und eine erste Schmelzlampe (108-1) der zweiten Schmelzanordnung (104-2) umfasst; und
Aktivieren eines zweiten Satzes von Schmelzlampen während einer nachfolgenden Anzahl von Verarbeitungszyklen zum Erzeugen des 3D-Objekts, wobei der zweite Satz eine zweite Schmelzlampe (106-2) der ersten Schmelzanordnung (104-1) und eine zweite Schmelzlampe (108-2) der zweiten Schmelzanordnung (104-2) umfasst;
wobei der erste Satz von Schmelzlampen (106-1, 108-1) und der zweite Satz von Schmelzlampen (106-2, 108-2) abwechselnd aktiviert werden.

2. 3D-Drucker (100, 200) nach Anspruch 1, wobei, wenn der erste Satz von Schmelzlampen aktiv ist, die Schmelzlampensteuerung (102) zu Folgendem konfiguriert ist:
Bestimmen, ob der zweite Satz von Schmelzlampen für einen nachfolgenden Verarbeitungszyklus betriebsfähig ist.

3. 3D-Drucker (100, 200) nach Anspruch 1, wobei, wenn der zweite Satz von Schmelzlampen aktiv ist, die Schmelzlampensteuerung (102) zu Folgendem konfiguriert ist:
Bestimmen, ob der erste Satz von Schmelzlampen für einen nachfolgenden Verarbeitungszyklus betriebsfähig ist.

4. 3D-Drucker (100, 200) nach Anspruch 1, wobei sich die erste Schmelzanordnung (104-1) auf einer Seite eines Wagens (202) des 3D-Druckers (100, 200) und die zweite Schmelzanordnung (104-2) auf einer anderen Seite des Wagens (202) befindet, wobei der Wagen (202) ein Druckkopfarray oder eine Materialbeschichtungseinheit beinhaltet.

5. 3D-Drucker (100, 200) nach Anspruch 4, wobei:
die erste Schmelzlampe (106-1) der ersten Schmelzanordnung (104-1) weiter von dem Wagen (202) entfernt ist,
die erste Schmelzlampe (108-1) der zweiten Schmelzanordnung (104-2) näher an dem Wagen (202) ist,
die zweite Schmelzlampe (106-2) der ersten Schmelzanordnung (104-1) näher an dem Wagen (202) ist und
die zweite Schmelzlampe (108-2) der zweiten Schmelzanordnung (104-2) weiter von dem Wagen (202) entfernt ist.

6. Verfahren zum Betreiben von Schmelzlampen von Schmelzanordnungen in einem 3-dimensionalen (3D) Drucker (100, 200), wobei das Verfahren Folgendes umfasst:
Aktivieren eines ersten Satzes von Schmelzlampen während einer Anzahl von Verarbeitungszyklen zum Erzeugen eines 3D-Objekts,
**dadurch gekennzeichnet, dass** der erste Satz von Schmelzlampen eine erste Schmelzlampe (106-1) einer ersten Schmelzanordnung (104-1) und eine erste Schmelzlampe (108-1) einer zweiten Schmelzanordnung (104-2) beinhaltet; und
das Verfahren ferner Folgendes umfasst:
Aktivieren eines zweiten Satzes von Schmelzlampen während einer nachfolgenden Anzahl von Verarbeitungszyklen zum Erzeugen des 3D-Objekts, wobei der zweite Satz von Schmelzlampen eine zweite Schmelzlampe (106-2) der ersten Schmelzanordnung (104-1) und eine zweite Schmelzlampe (108-2) der zweiten Schmelzanordnung (104-2) beinhaltet;
wobei der erste Satz von Schmelzlampen (106-1, 108-1) und der zweite Satz von Schmelzlampen (106-2, 108-2) abwechselnd aktiviert werden.

7. Verfahren nach Anspruch 6, das Folgendes umfasst:
wenn der erste Satz von Schmelzlampen der Schmelzanordnungen für einen Schmelzzyklus aktiv ist, Bestimmen, ob der zweite Satz von Schmelzlampen der Schmelzanordnungen für einen nachfolgenden Verarbeitungszyklus betriebsfähig ist.

8. Verfahren nach Anspruch 7, das Folgendes umfasst:
wenn der zweite Satz von Schmelzlampen der Schmelzanordnungen bestimmt wird, nicht betriebsfähig zu sein, Beleuchten des ersten Satzes von Schmelzlampen der Schmelzanordnungen während des nachfolgenden Verarbeitungszyklus.

9. Verfahren nach Anspruch 6, das Folgendes umfasst:
wenn der zweite Satz von Schmelzlampen der Schmelzanordnungen für einen Schmelzzyklus aktiv ist, Bestimmen, ob der erste Satz von Schmelzlampen der Schmelzanordnungen für einen nachfolgenden Verarbeitungszyklus betriebsfähig ist.

10. Verfahren nach Anspruch 9, das Folgendes umfasst:
wenn der erste Satz von Schmelzlampen der Schmelzanordnungen bestimmt wird, nicht betriebsfähig zu sein, Beleuchten des zweiten Satzes von Schmelzlampen der Schmelzanordnungen während des nachfolgenden Verarbeitungszyklus.

11. Nichtflüchtiges computerlesbares Medium (404), das computerlesbare Anweisungen umfasst, die, wenn sie durch einen Prozessor (402) des 3-dimensionalen (3D) Druckers (100, 200) nach Anspruch 1 ausgeführt werden, den Prozessor (402) zu Folgendem veranlassen:
Aktivieren des ersten Satzes von Schmelzlampen, der die erste Schmelzlampe (106-1) der ersten Schmelzanordnung (104-1) und die erste Schmelzlampe (108-1) der zweiten Schmelzanordnung (104-2) beinhaltet,
**dadurch gekennzeichnet, dass** die erste Schmelzanordnung (104-1) und die zweite Schmelzanordnung (104-2) mit gegenüberliegenden Seiten eines Wagens (202) des 3D-Druckers (100, 200) gekoppelt sind, wenn der Wagen (202) in eine erste Richtung zum 3D-Drucken einer Schicht auf einem Druckbereich (204) bewegt wird; und darin, dass
die Anweisungen den Prozessor (402) ferner zu Folgendem veranlassen:
Aktivieren des zweiten Satzes von Schmelzlampen, der die zweite Schmelzlampe (106-2) der ersten Schmelzanordnung (104-1) und die zweite Schmelzlampe (108-2) der zweiten Schmelzanordnung (104-2) beinhaltet, wenn der Wagen (202) in eine zweite Richtung zum 3D-Drucken einer nachfolgenden Schicht auf dem Druckbereich (204) bewegt wird;
wobei der erste Satz von Schmelzlampen (106-1, 108-1) und der zweite Satz von Schmelzlampen (106-2, 108-2) abwechselnd aktiviert werden.

12. Nichtflüchtiges computerlesbares Medium (404) nach Anspruch 11, wobei die Anweisungen, wenn sie durch den Prozessor (402) ausgeführt werden, den Prozessor (402) zu Folgendem veranlassen:
Bestimmen, ob der zweite Satz von Schmelzlampen der Schmelzanordnung betriebsfähig ist, wenn der Wagen (202) in die erste Richtung bewegt wird.

13. Nichtflüchtiges computerlesbares Medium (404) nach Anspruch 12, wobei die Anweisungen, wenn sie durch den Prozessor (402) ausgeführt werden, den Prozessor (402) zu Folgendem veranlassen:
wenn der zweite Satz von Schmelzlampen der Schmelzanordnung bestimmt wird, nicht betriebsfähig zu sein, Aktivieren des ersten Satzes von Schmelzlampen der Schmelzanordnung während der Bewegung des Wagens (202) in die zweite Richtung.

14. Nichtflüchtiges computerlesbares Medium (404) nach Anspruch 11, wobei die Anweisungen, wenn sie durch den Prozessor (402) ausgeführt werden, den Prozessor (402) zu Folgendem veranlassen:
Bestimmen, ob der erste Satz von Schmelzlampen der Schmelzanordnung betriebsfähig ist, wenn der Wagen (202) in die zweite Richtung bewegt wird.

15. Nichtflüchtiges computerlesbares Medium (404) nach Anspruch 14, wobei die Anweisungen, wenn sie durch den Prozessor (402) ausgeführt werden, den Prozessor (402) zu Folgendem veranlassen:
wenn der erste Satz von Schmelzlampen der Schmelzanordnung bestimmt wird, nicht betriebsfähig zu sein, Aktivieren des zweiten Satzes von Schmelzlampen der Schmelzanordnung während der Bewegung des Wagens (202) in die erste Richtung.

## Revendications

1. Imprimante tridimensionnelle, 3D, (100, 200) comprenant :
un premier ensemble de fusion (104-1) ayant au moins deux lampes de fusion ;
un second ensemble de fusion (104-2) ayant au moins deux lampes de fusion ; et
**caractérisée en ce que** l'imprimante 3D (100, 200) comprend un dispositif de commande de lampe de fusion (102), couplé au premier ensemble de fusion (104-1) et au second ensemble de fusion (104-2), configuré pour :
activer un premier ensemble de lampes de fusion pendant un certain nombre de cycles de traitement pour générer un objet 3D, le premier ensemble de lampes de fusion comprenant une première lampe de fusion (106-1) du premier ensemble de fusion (104-1) et une première lampe de fusion (108-1) du second ensemble de fusion (104-2) ; et
activer un second ensemble de lampes de fusion pendant un nombre de cycles de traitement ultérieur pour générer l'objet 3D, le second ensemble comprenant une seconde lampe de fusion (106-2) du premier ensemble de fusion (104-1) et une seconde lampe de fusion (108-2) du second ensemble de fusion (104-2) ;
le premier ensemble de lampes à fusion (106-1, 108-1) et le second ensemble de lampes à fusion (106-2, 108-2) étant activés en alternance.

2. Imprimante 3D (100, 200) selon la revendication 1, dans laquelle, lorsque le premier ensemble de lampes de fusion est actif, le dispositif de commande de lampe de fusion (102) est configuré pour :
déterminer si le second ensemble de lampes de fusion peut fonctionner pendant un cycle de traitement ultérieur.

3. Imprimante 3D (100, 200) selon la revendication 1, dans laquelle, lorsque le second ensemble de lampes de fusion est actif, le dispositif de commande de lampe de fusion (102) est configuré pour :
déterminer si le premier ensemble de lampes de fusion peut fonctionner pendant un cycle de traitement ultérieur.

4. Imprimante 3D (100, 200) selon la revendication 1, dans laquelle le premier ensemble de fusion (104-1) est sur un côté d'un chariot (202) de l'imprimante 3D (100, 200) et le second ensemble de fusion (104-2) sur un autre côté du chariot (202), le chariot (202) comportant l'un parmi un réseau de têtes d'impression et une unité de revêtement de matériau.

5. Imprimante 3D (100, 200) selon la revendication 4, dans laquelle
la première lampe de fusion (106-1) du premier ensemble de fusion (104-1) est plus éloignée du chariot (202),
la première lampe de fusion (108-1) du second ensemble de fusion (104-2) est plus proche du chariot (202),
la seconde lampe de fusion (106-2) du premier ensemble de fusion (104-1) est plus proche du chariot (202), et
la seconde lampe de fusion (108-2) du second ensemble de fusion (104-2) est plus éloignée du chariot (202).

6. Procédé de fonctionnement de lampes de fusion d'ensembles de fusion dans une imprimante tridimensionnelle (3D) (100, 200), le procédé comprenant :
l'activation d'un premier ensemble de lampes de fusion pendant un certain nombre de cycles de traitement pour générer un objet 3D,
**caractérisé en ce que** le premier ensemble de lampes de fusion comprend une première lampe de fusion (106-1) d'un premier ensemble de fusion (104-1) et une première lampe de fusion (108-1) d'un second ensemble de fusion (104-2) ; et
le procédé comprend en outre :
l'activation d'un second ensemble de lampes de fusion pendant un nombre de cycles de traitement ultérieur pour générer l'objet 3D, où le second ensemble de lampes de fusion comporte une seconde lampe de fusion (106-2) du premier ensemble de fusion (104-1) et une seconde lampe de fusion (108-2) du second ensemble de fusion (104-2) ;
le premier ensemble de lampes de fusion (106-1, 108-1) et le second ensemble de lampes de fusion (106-2, 108-2) étant activés en alternance.

7. Procédé selon la revendication 6, comprenant :
lorsque le premier ensemble de lampes de fusion des ensembles de fusion est actif pendant un cycle de fusion, la détermination du fait de savoir si le second ensemble de lampes de fusion des ensembles de fusion peut fonctionner pendant un cycle de traitement ultérieur.

8. Procédé selon la revendication 7, comprenant :
lorsque le second ensemble de lampes de fusion des ensembles de fusion est déterminé comme étant inutilisable, l'éclairage du premier ensemble de lampes de fusion des ensembles de fusion pendant le cycle de traitement ultérieur.

9. Procédé selon la revendication 6, comprenant :
lorsque le second ensemble de lampes de fusion des ensembles de fusion est actif pendant un cycle de fusion, la détermination du fait de savoir si le premier ensemble de lampes de fusion des ensembles de fusion peut fonctionner pendant un cycle de traitement ultérieur.

10. Procédé selon la revendication 9, comprenant :
lorsque le premier ensemble de lampes de fusion des ensembles de fusion est déterminé comme étant inutilisable, l'éclairage du second ensemble de lampes de fusion des ensembles de fusion pendant le cycle de traitement ultérieur.

11. Support non transitoire lisible par ordinateur (404) comprenant des instructions lisibles par ordinateur qui, lorsqu'elles sont exécutées par un processeur (402) de l'imprimante tridimensionnelle (3D) (100, 200) selon la revendication 1, amènent le processeur (402) à :
activer le premier ensemble de lampes de fusion comportant la première lampe de fusion (106-1) du premier ensemble de fusion (104-1) et la première lampe de fusion (108-1) du second ensemble de fusion (104-2),
**caractérisé en ce que** le premier ensemble de fusion (104-1) et le second ensemble de fusion (104-2) sont accouplés aux côtés opposés d'un chariot (202) de l'imprimante 3D (100, 200), lorsque le chariot (202) est déplacé dans une première direction pour imprimer en 3D une couche sur une zone d'impression (204) ; et en cela
les instructions amènent en outre le processeur (402) à :
activer le second ensemble de lampes de fusion comportant la seconde lampe de fusion (106-2) du premier ensemble de fusion (104-1) et la seconde lampe de fusion (108-2) du second ensemble de fusion (104-2), lorsque le chariot (202) est déplacé dans une seconde direction pour imprimer en 3D une couche ultérieure sur la zone d'impression (204) ;
le premier ensemble de lampes de fusion (106-1, 108-1) et le second ensemble de lampes de fusion (106-2, 108-2) étant activés en alternance.

12. Support non transitoire lisible par ordinateur (404) selon la revendication 11, dans lequel les instructions, lorsqu'elles sont exécutées par le processeur (402), amènent le processeur (402) à :
déterminer si le second ensemble de lampes de fusion de l'ensemble de fusion peut fonctionner, lorsque le chariot (202) est déplacé dans la première direction.

13. Support non transitoire lisible par ordinateur (404) selon la revendication 12, dans lequel les instructions, lorsqu'elles sont exécutées par le processeur (402), amènent le processeur (402) à :
lorsque le second ensemble de lampes de fusion de l'ensemble de fusion est déterminé comme étant inutilisable, activer le premier ensemble de lampes de fusion de l'ensemble de fusion pendant le déplacement du chariot (202) dans la seconde direction.

14. Support non transitoire lisible par ordinateur (404) selon la revendication 11, dans lequel les instructions, lorsqu'elles sont exécutées par le processeur (402), amènent le processeur (402) à :
déterminer si le premier ensemble de lampes de fusion de l'ensemble de fusion peut fonctionner, lorsque le chariot (202) est déplacé dans la seconde direction.

15. Support non transitoire lisible par ordinateur (404) selon la revendication 14, dans lequel les instructions, lorsqu'elles sont exécutées par le processeur (402), amènent le processeur (402) à :
lorsque le premier ensemble de lampes de fusion de l'ensemble de fusion est déterminé comme étant inutilisable, activer le second ensemble de lampes de fusion de l'ensemble de fusion pendant le déplacement du chariot (202) dans la première direction.
